# EUROPEAN PATENT APPLICATION

(11) **EP 4 810 556 A1**
(43) Date of publication of application: **23.09.2026**
(21) Application number: 26164957.8
(22) Date of filing: 16.03.2026
(51) Int. Cl.: C08K 5/5313, C08K 5/5317, C08K 5/134, C08K 5/526, C08L 77/06

(54) **POLYMER ADDITIVE, AND PREPARATION METHOD AND APPLICATION THEREOF**

(30) Priority: 17.03.2025 CN 202510310690
(71) Applicant: KINGFA SCI. & TECH. CO., LTD., Guangzhou, Guangdong 510663 (CN); Liaoning Kingfa Biomaterial Co., Ltd., Panjin City, Liaoning Province 124000 (CN)
(72) Inventor: Jing, Xinke, Guangzhou, Guangdong, 510663 (CN); Chen, Pingxu, Guangzhou, Guangdong, 510663 (CN); Ye, Nanbiao, Guangzhou, Guangdong, 510663 (CN); Li, Jide, Guangzhou, Guangdong, 510663 (CN); Liu, Zhen, Guangzhou, Guangdong, 510663 (CN); Tan, Xiaobin, Guangzhou, Guangdong, 510663 (CN); Tang, Ming, Guangzhou, Guangdong, 510663 (CN)
(74) Representative: Petraz, Gilberto Luigi

(57) **Abstract**

The present invention provides a polymer additive, and a preparation method and an application thereof. The preparation method comprises the following steps: subjecting an aqueous hypophosphorous acid solution and an antioxidant to a free radical reaction with ethylene under the action of an initiator to obtain an aqueous diethylphosphinic acid solution; subjecting the aqueous diethylphosphinic acid solution, sulfuric acid, and a metal hydroxide to a reaction, followed by adding an alkaline solution to obtain a diethylphosphinate slurry with a pH value of 3.8-4.2; and mixing the diethylphosphinate slurry with a flocculant and stirring to obtain a diethylphosphinate flocculate, followed by filtering, washing, and drying to obtain the polymer additive. According to the present invention, through the design of the preparation method, a polymer additive with a low acid value can be obtained. When used as a flame retardant in preparation of a polymer material, the polymer additive can inhibit auxiliary precipitation during high-temperature processing, reduce mold deposits, and enable a prepared polymer composition to have a lower content of water-boiling precipitates, thereby improving its service life under hot and humid conditions.

## Description

### TECHNICAL FIELD

The present invention belongs to the technical field of flame retardants, and specifically relates to a polymer additive, and a preparation method and an application thereof.

### BACKGROUND

As a versatile halogen-free flame retardant, dialkyl phosphinates not only exhibit excellent flame retardant properties, a low addition amount, and a minor impact on the physical and electrical properties of the base resin, but also have drawn extensive attention in the industry owing to their features such as low smoke generation and high comparative tracking index (CTI) during combustion. Meanwhile, materials such as polyamides flame-retarded with dialkylphosphinates possess superior mechanical and electrical properties, and are increasingly favored by manufacturers in the electrical and electronic industry, with very broad market prospects for application.

A study by Braun U et al. found that when dialkylphosphinates are used to flame-retard PBT and polyamides, dialkylphosphinic acid is released by decomposition in the high-temperature process.

When dialkylphosphinates are used as flame retardants for polyamides, the relatively high content of polar amide groups in polyamides renders polyamides prone to moisture absorption with a high water absorption rate. For example, the water absorption rate of PA66 resin can reach 2.7% under conditions of 23°C and 50% humidity. During extrusion processing or high-temperature injection molding processing, dialkylphosphinates are inherently acidic to a certain extent and decompose to release acidic dialkylphosphinic acid upon heating, which readily promotes decomposition of the system and leads to a larger amount of gas emission during processing. In repeated injection molding processes, severe mold deposits often form on the mold, affecting the appearance of the articles. Due to the presence of mold deposits, frequent mold cleaning is required, resulting in low efficiency and making it difficult to popularize and use the products satisfactorily.

At present, the main method for solving the mold deposit problem in the injection molding of dialkyl phosphinate flame-retardant polyamide materials is to add an acid acceptor to the system to reduce the acidity of the system. For example, in EP2417191A1, calcium oxide is added into the system, which neutralizes some acidic substances in the system, reduces the acidity of the system, and decreases the decomposition of the matrix resin, thereby effectively reducing corrosion to the mold during high-temperature injection molding. Although this method is helpful to a certain extent in reducing mold deposits, calcium oxide easily absorbs moisture, resulting in a high water absorption rate of the system, which is difficult to control during processing.

In CN112409786A, the prepared halogen-free flame-retardant thermoplastic polyamide exhibits low mold deposits by adding a certain amount of ethylene copolymer to the system. In CN114874616A, the prepared halogen-free flame-retardant thermoplastic polyamide achieves better yellowing resistance and more consecutive mold opening and closing cycles (indicating lower mold deposits) by adding a metal oxide and a polyhydroxy system to the system.

Although the above technical solutions provide certain improvements in mold deposits of dialkylphosphinate-flame-retarded polyamides, they all rely on adding external auxiliaries to adjust the acidity of the system and reduce mold deposits. This increases costs, while it is difficult to prevent the addition of new components from affecting other properties of the flame-retardant polyamide. For example, the incorporation of inorganic metal oxides leads to a decrease in the mechanical properties of the material. Moreover, the inherent property defects of dialkylphosphinates have not been fundamentally improved, resulting in easy precipitation of auxiliaries from articles containing them during high-temperature processing. On the one hand, this may block the pipelines of processing equipment; on the other hand, it may cause apparent defects in the articles.

Therefore, how to provide a novel polymer additive with low acidity, which can reduce auxiliary precipitation during high-temperature processing when used for the flame-retardant modification of polymer materials, and enable the modified polymer materials to have lower mold deposits and a minimal additive precipitation amount, has become an urgent problem to be solved in this field.

### SUMMARY

In view of the deficiencies of the prior art, an objective of the present invention is to provide a polymer additive, and a preparation method and an application thereof. Through the design and combined effect of materials and processes in the preparation method, a polymer additive with low acid value can be obtained. When the polymer additive is used as a flame retardant to prepare polymer materials, it can inhibit or avoid auxiliary precipitation during high-temperature processing, effectively reduce mold deposits, and enable a prepared polymer composition to have a lower content of water-boiling precipitates, thereby improving its service life under hot and humid conditions.

To achieve this objective, the present invention adopts the following technical solutions:
In a first aspect, the present invention provides a method for preparing a polymer additive, including the following steps:
(1) subjecting an aqueous hypophosphorous acid solution and an antioxidant to a free radical reaction with ethylene under the action of an initiator to obtain an aqueous diethylphosphinic acid solution;
(2) subjecting the aqueous diethylphosphinic acid solution, sulfuric acid, and a metal hydroxide to a reaction, followed by adding an alkaline solution to obtain a diethylphosphinate slurry with a pH value of 3.8-4.2; and
(3) mixing and stirring the diethylphosphinate slurry with a flocculant to obtain a diethylphosphinate flocculate; and filtering, washing, and drying the diethylphosphinate flocculate to obtain the polymer additive.

The present invention finds that the reaction between hypophosphorous acid and ethylene is generally carried out in the presence of a free radical initiator. Hypophosphorous acid has strong reducibility due to the presence of P-H bonds, so both free radical reaction and oxidation reaction generally coexist during the process of step (1). In the present invention, an antioxidant is introduced in step (1), which can donate electrons to an oxidizing agent and thereby reduce it to a relatively stable substance, so as to achieve the effect of the oxidation performance of the initiator. On the other hand, the free radical reaction between hypophosphorous acid and ethylene is a strongly exothermic reaction, which is prone to uncontrollable phenomena and generates many side reactions during production. Another mechanism of action of the antioxidant is to capture free radicals by reacting with free radicals and neutralize their activity, which can effectively slow down the exothermic effect and reduce the occurrence of side reactions, thereby making the production process controllable. Adding the antioxidant during step (1) in the present invention can effectively reduce a water-soluble acid value and an organic acid value of a final product.

The present invention finds that a pH of a reaction system has a great influence on a crystallization behavior in a precipitation process of the additive, thereby affecting the acid value of the polymer additive. The present invention is designed to adjust a pH of the product obtained from the reaction in step (2), and controls a pH of the obtained diethylphosphinate slurry to be 3.8-4.2, and for example, may be 3.82, 3.85, 3.88, 3.9, 3.92, 3.95, 3.98, 4, 4.02, 4.05, 4.08, 4.1, 4.12, 4.15, 4.18, etc., so that the prepared polymer additive has a low acid value, while ensuring a high yield of the product. If the pH of the slurry is too low, the acidity of the polymer additive tends to be excessively high and a yield decreases; and if the pH of the slurry is too high, the acid value of the polymer additive will also increase, and further increase in pH will lead to further reduction of a yield.

The present invention finds through research that the introduction of the flocculant enables surfaces of polymer additive particles to be fixed on molecular chains of the flocculant, forming polymer bridges, thereby allowing the particles to aggregate and settle. The flocculant adsorbs and binds the polymer additive in the slurry obtained in step (2), which can effectively improve the filtration and washing effect of the polymer additive, and at the same time effectively reduce the acidity of the polymer additive after filtration and washing.

In summary, the present invention designs the method for preparing the polymer additive. By using the antioxidant and the flocculant during the preparation of the polymer additive, and controlling the pH of the diethylphosphinate slurry to be 3.8-4.2, a polymer additive with a low acid value is prepared. When the polymer additive is used as a flame retardant to prepare a polymer composition, it can inhibit or avoid auxiliary precipitation during high-temperature processing, significantly reduce mold deposits, and enable the polymer composition to have a low content of water-boiling precipitates, thereby greatly improving the service life of the polymer composition under hot and humid conditions.

The following shows preferred technical solutions of the present invention, but is not intended to limit the technical solutions provided by the present invention. Through the following preferred technical solutions, the objectives and beneficial effects of the present invention can be better achieved and realized.

Preferably, the antioxidant includes any one or a combination of at least two of a hindered amine antioxidant, a hindered phenol antioxidant, a phosphite antioxidant, and a thioester antioxidant, more preferably any one or a combination of at least two of a hindered phenol antioxidant, a phosphite antioxidant, and a thioester antioxidant.

Further preferably, the antioxidant includes any one or a combination of at least two of pentaerythritol tetrakis(β-(3,5-di-tert-butyl-4-hydroxyphenyl)propionate) (antioxidant 1010), n-octadecyl β-(3,5-di-tert-butyl-4-hydroxyphenyl)propionate (antioxidant 1076), N,N'-bis-(3-(3,5-di-tert-butyl-4-hydroxyphenyl)propionyl)hexanediamine (antioxidant 1098), tris(2,4-di-tert-butylphenyl) phosphite (antioxidant 168), bis(2,4-dicumylphenyl)pentaerythritol diphosphite (antioxidant 608), 2,6-di-tert-butyl-p-cresol (antioxidant BHT), distearyl β,β-thiodipropionate (antioxidant DSTP), antioxidant 215, and antioxidant 225.

The antioxidant in the present invention may be a single component, such as any one of the antioxidants listed above, and may also be a composite antioxidant compounded from multiple components, such as a combination of a hindered phenol antioxidant and a phosphite antioxidant. A typical combination is a compound of antioxidant 1010 and antioxidant 168 in different ratios, such as antioxidant 215, antioxidant 225, and the like.

Preferably, the initiator includes any one or a combination of at least two of an organic peroxide, a persulfate, an azo initiator, and a photoinitiator.

Preferably, the organic peroxide includes any one or a combination of at least two of diisobutyryl peroxide, benzoyl peroxide, bis(2-ethylhexyl) peroxydicarbonate, diisopropyl peroxydicarbonate, 1,1,3,3-tetramethylbutyl peroxypivalate, tert-butyl peroxypivalate, tert-amyl peroxypivalate, dilauroyl peroxide, bis(3,3,5-trimethylhexanoyl) peroxide, 2,5-dimethyl-2,5-bis(2-ethylhexanoylperoxy)hexane, 1,1,3,3-tetramethylbutyl peroxy-2-ethylhexanoate, bis(4-methylbenzoyl) peroxide, tert-amyl peroxy-2-ethylhexanoate, tert-butyl peroxy-2-ethylhexanoate, tert-butyl peroxyisobutyrate, 1,1-di(tert-butylperoxy)-3,3,5-trimethylcyclohexane, 1,1-di(tert-amylperoxy)cyclohexane, 1,1-di(tert-butylperoxy)cyclohexane, di(tert-butyl) peroxide, di(tert-amyl) peroxide, dicumyl peroxide, 2,5-di(tert-butylperoxy)-2,5-dimethylhexane, tert-butyl peroxyacetate, tert-amyl peroxybenzoate, tert-butyl peroxymaleate, and tert-butyl peroxy-2-ethylhexyl carbonate.

Preferably, the persulfate includes any one or a combination of at least two of sodium persulfate, potassium persulfate, and ammonium persulfate.

Preferably, the azo initiator includes any one or a combination of at least two of 2,2'-azobis(2-methylpropionitrile), 2,2'-azobis(2,4-dimethylvaleronitrile), 2,2'-azobis(2-methylpropionamidine) dihydrochloride, 2,2'-azobis[2-(2-imidazolin-2-yl)propane] dihydrochloride, and 1-((cyano-1-methylethyl)azo)formamide.

It should be noted that the present invention imposes no particular limitation on the specific selection of photoinitiators, and photoinitiators commonly used in the art are all suitable.

It should be noted that the initiator in step (1) of the present invention may be added in one portion, in batches, or continuously in the reaction process; furthermore, a portion of the initiator in step (1) may be added in advance, and the remainder is added continuously in the reaction process.

Preferably, a mass percentage content of hypophosphorous acid in the aqueous hypophosphorous acid solution is 20-70%, and for example, may be 25%, 30%, 35%, 40%, 45%, 50%, 55%, 60%, or 65%, as well as specific point values among the above point values. For reasons of limited space and for the sake of brevity, the specific point values included in the range are not exhaustively enumerated in the present invention. Further preferably, the mass percentage content is 45-55%.

Preferably, a mass ratio of the hypophosphorous acid to the antioxidant is 100:(0.02-1.2), and for example, may be 100:0.04, 100:0.05, 100:0.06, 100:0.08, 100:0.1, 100:0.2, 100:0.3, 100:0.4, 100:0.5, 100:0.6, 100:0.7, 100:0.8, 100:0.9, 100:0.95, 100:1, 100:1.05, 100:1.1, or 100:1.15, further preferably 100:(0.05-1).

Preferably, a mass ratio of the hypophosphorous acid to the initiator is 100:(0.1-5), and for example, may be 100:0.2, 100:0.5, 100:1, 100:1.5, 100:2, 100:2.5, 100:3, 100:3.5, 100:4, 100:4.5, or 100:4.8.

Preferably, a molar ratio of the ethylene to the hypophosphorous acid is (2-2.1):1, and for example, may be 2.01:1, 2.02:1, 2.04:1, 2.05:1, 2.06:1, 2.08:1, or 2.09:1.

Preferably, a temperature of the free radical reaction is 60-105°C, and for example, may be 65°C, 70°C, 75°C, 80°C, 85°C, 90°C, 95°C, or 98°C, as well as specific point values among the above point values. For reasons of limited space and for the sake of brevity, the specific point values included in the range are not exhaustively enumerated in the present invention. More preferably, the temperature is 70-100°C, and further preferably 75-95°C.

The free radical reaction in step (1) is carried out in the presence of an initiator. When a pressure of a reaction system substantially no longer changes, the reaction can be regarded as complete and stopped.

Preferably, the free radical reaction is carried out in a protective atmosphere.

Preferably, the protective atmosphere includes a nitrogen atmosphere and/or an argon atmosphere.

Preferably, the metal hydroxide includes any one or a combination of at least two of aluminum hydroxide, calcium hydroxide, copper hydroxide, zinc hydroxide, iron hydroxide, and titanium hydroxide, more preferably aluminum hydroxide.

Preferably, the iron hydroxide includes ferrous hydroxide and/or ferric hydroxide.

By adopting the above metal hydroxide, a cation in the diethylphosphinate obtained includes any one of Al, Ca, Cu, Zn, Fe, or Ti, more preferably Al.

Preferably, based on a molar amount of the diethylphosphinic acid as 100%, a molar amount of the metal hydroxide is 30-50 mol%, and for example, may be 32 mol%, 33 mol%, 33.3 mol%, 34 mol%, 35 mol%, 36 mol%, 38 mol%, 40 mol%, 42 mol%, 45 mol%, or 48 mol%, as well as specific point values among the above point values. For reasons of limited space and for the sake of brevity, the specific point values included in the range are not exhaustively enumerated in the present invention.

Preferably, based on a molar amount of the diethylphosphinic acid as 100%, a molar amount of the sulfuric acid is 5-50 mol%, and for example, may be 8 mol%, 10 mol%, 12 mol%, 15 mol%, 18 mol%, 20 mol%, 22 mol%, 25 mol%, 28 mol%, 30 mol%, 32 mol%, 35 mol%, 38 mol%, 40 mol%, 42 mol%, 45 mol%, or 48 mol%, as well as specific point values among the above point values. For reasons of limited space and for the sake of brevity, the specific point values included in the range are not exhaustively enumerated in the present invention. Further preferably, the molar amount is 8-30 mol%, and more preferably 10-15 mol%.

Preferably, a temperature of the reaction in step (2) is 70-150°C, and for example, may be 75°C, 80°C, 90°C, 100°C, 110°C, 120°C, 130°C, 140°C, or 145°C, as well as specific point values among the above point values. For reasons of limited space and for the sake of brevity, the specific point values included in the range are not exhaustively enumerated in the present invention. Further preferably, the temperature is 80-120°C, and more preferably 90-100°C.

Preferably, a time of the reaction in step (2) is 2-12 h, and for example, may be 3 h, 4 h, 5 h, 6 h, 7 h, 8 h, 9 h, 10 h, 11 h, or 11.5 h, as well as specific point values among the above point values. For reasons of limited space and for the sake of brevity, the specific point values included in the range are not exhaustively enumerated in the present invention.

Preferably, the alkaline solution includes a sodium hydroxide solution and/or a potassium hydroxide solution.

The present invention imposes no particular limitation on a mass concentration of the sodium hydroxide solution and the potassium hydroxide solution. It is only required to add the sodium hydroxide solution and/or the potassium hydroxide solution to maintain a pH of the diethylphosphinate slurry obtained in step (2) at 3.8-4.2.

Preferably, the flocculant includes a polyacrylamide flocculant, more preferably anionic polyacrylamide and/or nonionic polyacrylamide, and more preferably anionic polyacrylamide.

As a preferred technical solution of the present invention, adoption of the polyacrylamide flocculant enables the surfaces of polymer additive particles to be fixed on the molecular chains of the flocculant, forming polymer bridges. Especially when the anionic polyacrylamide is added as the flocculant, adsorption bridging and reinforcing effects can be produced, thereby allowing the particles to aggregate and settle, improving the filtration and washing effect of the polymer additive, and reducing the acid value of the polymer additive after filtration and washing.

Preferably, based on a theoretical mass of the diethylphosphinate as 100%, a mass percentage content of the flocculant is 0.01-0.5%, and for example, may be 0.02%, 0.05%, 0.08%, 0.1%, 0.12%, 0.15%, 0.18%, 0.2%, 0.22%, 0.25%, 0.28%, 0.3%, 0.32%, 0.35%, 0.38%, 0.4%, 0.42%, 0.45%, or 0.48%, as well as specific point values among the above point values. For reasons of limited space and for the sake of brevity, the specific point values included in the range are not exhaustively enumerated in the present invention.

The "theoretical mass obtained of the diethylphosphinate" is calculated from feeding amounts of the diethylphosphinic acid and the metal hydroxide in step (2).

Preferably, the flocculant may be first mixed with water at 20-30°C for 10-20 min to obtain a flocculant solution, and then the flocculant solution is mixed and stirred with the diethylphosphinate slurry. A mass ratio of the flocculant to water is 1:(10-1000), and for example, may be 1:50, 1:100, 1:200, 1:300, 1:400, 1:500, 1:600, 1:700, 1:800, 1:900, or 1:950, or the like.

Preferably, a temperature of the mixing in step (3) is 40-60°C, and for example, may be 42°C, 44°C, 46°C, 48°C, 50°C, 52°C, 54°C, 56°C, or 58°C, as well as specific point values among the above point values. For reasons of limited space and for the sake of brevity, the specific point values included in the range are not exhaustively enumerated in the present invention.

Preferably, the number of washings in step (3) is ≥ 4, and for example, may be 5, 6, 7, 8, 9, 10, or 12, further preferably 5-10.

Preferably, a washing agent used for the washing is water.

As a preferred technical solution of the present invention, the diethylphosphinate flocculate is filtered and washed multiple times. The number of washings is ≥ 4, preferably 5-10, which can better remove impurities and acidic substances from a product, so as to obtain the polymer additive with a low acid value.

Preferably, a mass ratio of water to a solid in each washing is independently (1-10):1, and for example, may be 2:1, 3:1, 4:1, 5:1, 6:1, 7:1, 8:1, or 9:1, further preferably (1.5-6):1. The solid refers to a solid product obtained by filtration.

Preferably, a temperature of the drying in step (3) is 105-250°C, and for example, may be 110°C, 120°C, 130°C, 140°C, 150°C, 160°C, 180°C, 200°C, 220°C, or 240°C, as well as specific point values among the above point values. For reasons of limited space and for the sake of brevity, the specific point values included in the range are not exhaustively enumerated in the present invention. Further preferably, the temperature is 110-150°C.

As a preferred technical solution of the present invention, the method for preparing the polymer additive specifically includes the following steps:
(1) subjecting an aqueous hypophosphorous acid solution and an antioxidant to a free radical reaction with ethylene under the action of an initiator in a protective atmosphere to obtain an aqueous diethylphosphinic acid solution,
   where a mass concentration of the aqueous hypophosphorous acid solution is 20-70%, and a mass ratio of the hypophosphorous acid, the antioxidant, and the initiator is 100:(0.02-1.2):(0.1-5); and a temperature of the free radical reaction is 60-100°C, and the reaction is terminated when a pressure of a system no longer changes;
(2) subjecting the aqueous diethylphosphinic acid solution, sulfuric acid, and a metal hydroxide to a reaction at 70-150°C for 2-12 h, followed by adding an alkaline solution to adjust a pH of a system to 3.8-4.2 to obtain a diethylphosphinate slurry,
   where based on a molar amount of the diethylphosphinic acid as 100%, a molar amount of the metal hydroxide is 30-50 mol%, and a molar amount of the sulfuric acid is 5-50 mol%; and
(3) mixing and stirring the diethylphosphinate slurry and a flocculant solution at 40-60°C to obtain a diethylphosphinate flocculate; and filtering and washing the diethylphosphinate flocculate ≥ 4, and drying to obtain the polymer additive,
   where based on a theoretical mass obtained of the diethylphosphinate as 100%, a mass of the flocculant is 0.01-0.5%.

In a second aspect, the present invention provides a polymer additive, prepared by the preparation method according to the first aspect, where a water-soluble acid value of the polymer additive is ≤ 0.3 mg KOH/g, and the polymer additive includes, in parts by mass, the following components:

| | |
|---|---|
| a diethylphosphinate | 95-98.98 parts |
| an ethylbutylphosphinate | 1-3 parts |
| an ethylphosphonate | 0.01-0.7 part |
| a monoethylphosphinate | 0.01-0.3 part |
| an alkali-insoluble substance | 0-3 parts, |

where the alkali-insoluble substance is selected from any one or a combination of at least two of a hydroxide, an oxide, a phosphate, a phosphite, and other alkylphosphonates.

The polymer additive provided by the present invention has low acidity, with a water-soluble acid value ≤ 0.3 mg KOH/g. When used as a flame retardant in a polymer composition, the polymer additive can inhibit decomposition to produce dialkylphosphinic acid in a high-temperature process, inhibit or avoid auxiliary precipitation during high-temperature processing, thereby preventing precipitates from blocking device pipelines, and enabling the polymer composition with a lower content of hot-water precipitates. This greatly improves the service stability of the polymer composition under hot and humid conditions and prolongs the service life, with a small quantity of mold deposits generated during injection molding.

The diethylphosphinate in the polymer additive, in parts by mass, is 95-98.98 parts, and for example, may be 95.5 parts, 95.8 parts, 96 parts, 96.2 parts, 96.5 parts, 96.8 parts, 96.9 parts, 97 parts, 97.2 parts, 97.5 parts, 97.8 parts, 98 parts, 98.2 parts, 98.5 parts, 98.8 parts, or 98.9 parts, as well as specific point values among the above point values. For reasons of limited space and for the sake of brevity, the specific point values included in the range are not exhaustively enumerated in the present invention.

Preferably, a mass percentage content of the diethylphosphinate in the polymer additive is ≥ 94%, and for example, may be 94.5%, 95%, 95.5%, 95.8%, 96%, 96.2%, 96.5%, 96.8%, 96.9%, 97%, 97.2%, 97.5%, 97.8%, 98%, 98.2%, 98.5%, 98.8%, or 98.98%, as well as specific point values among the above point values. For reasons of limited space and for the sake of brevity, the specific point values included in the range are not exhaustively enumerated in the present invention.

The ethylbutylphosphinate in the polymer additive, in parts by mass, is 1-3 parts, and for example, may be 1.1 parts, 1.2 parts, 1.5 parts, 1.6 parts, 1.8 parts, 2 parts, 2.2 parts, 2.5 parts, 2.7 parts, 2.8 parts, or 2.9 parts, as well as specific point values among the above point values. For reasons of limited space and for the sake of brevity, the specific point values included in the range are not exhaustively enumerated in the present invention.

The ethylphosphonate in the polymer additive, in parts by mass, is 0.01-0.7 parts, and for example, may be 0.02 parts, 0.05 parts, 0.1 parts, 0.15 parts, 0.2 parts, 0.25 parts, 0.3 parts, 0.35 parts, 0.4 parts, 0.45 parts, 0.5 parts, 0.55 parts, 0.6 parts, or 0.65 parts, as well as specific point values among the above point values. For reasons of limited space and for the sake of brevity, the specific point values included in the range are not exhaustively enumerated in the present invention.

The monoethylphosphinate in the polymer additive, in parts by mass, is 0.01-0.3 parts, and for example, may be 0.02 parts, 0.04 parts, 0.05 parts, 0.06 parts, 0.08 parts, 0.1 parts, 0.12 parts, 0.14 parts, 0.15 parts, 0.16 parts, 0.18 parts, 0.2 parts, 0.22 parts, 0.25 parts, or 0.28 parts, as well as specific point values among the above point values. For reasons of limited space and for the sake of brevity, the specific point values included in the range are not exhaustively enumerated in the present invention.

The alkali-insoluble substance in the polymer additive, in parts by mass, is 0-3 parts, and for example, may be 0.01 parts, 0.02 parts, 0.05 parts, 0.08 parts, 0.1 parts, 0.15 parts, 0.2 parts, 0.25 parts, 0.3 parts, 0.4 parts, 0.5 parts, 0.6 parts, 0.8 parts, 1 part, 1.2 parts, 1.5 parts, 1.8 parts, 2 parts, 2.2 parts, 2.5 parts, or 2.8 parts, as well as specific point values among the above point values. For reasons of limited space and for the sake of brevity, the specific point values included in the range are not exhaustively enumerated in the present invention.

Exemplarily, the parts by mass of diethylphosphinate, ethylbutylphosphinate, ethylphosphonate, and monoethylphosphinate in the polymer additive may be analyzed and determined via testing by liquid chromatography. For example, the sample to be tested is dissolved in an aqueous sulfuric acid solution (mass concentration 30%) of 5 times the sample mass, and then diluted by 10-30 times with a mobile phase for analysis and testing. A mixture of water and methanol at a mass ratio of 9:1 is adopted for the mobile phase, with trifluoroacetic acid added at a volume content of 0.5%. A ShimNex CS C18 chromatographic column is adopted with a flow rate of 0.6 mL/min. The mass content of each component is calculated by an area normalization method.

Exemplarily, the parts by mass of the alkali-insoluble substance in the polymer additive are determined via testing by the following method: the sample to be tested is mixed with an aqueous sodium hydroxide solution (mass concentration 3%) at a mass ratio of 1:100, stirred at 35°C for 30 min, filtered with filter paper having a precision of ≤ 2 µm, and rinsed with water 3 times. The filter paper is dried and then weighed, and the mass increase value relative to the filter paper before filtration (dry filter paper) is the mass of the insoluble substance. The ratio of the mass of the insoluble substance to the mass of the sample to be tested is the mass content of the alkali-insoluble substance.

Preferably, the polymer additive includes, in parts by mass, the following components:

| | |
|---|---|
| a diethylphosphinate | 96.5-98.5 parts |
| an ethylbutylphosphinate | 1.1-2.8 parts |
| an ethylphosphonate | 0.1-0.65 part |
| a monoethylphosphinate | 0.02-0.2 part |
| an alkali-insoluble substance | 0-0.4 parts. |

Preferably, the cations in the diethylphosphinate, the ethylbutylphosphinate, the ethylphosphonate, and the monoethylphosphinate are the same, and are selected from any one or a combination of at least two of Al³⁺, Ca²⁺, Cu²⁺, Zn²⁺, Fe²⁺, Fe³⁺, or Ti⁴⁺.

In the present invention, a water-soluble acid value of the polymer additive is ≤ 0.3 mg KOH/g, and for example, may be 0.1 mg KOH/g, 0.12 mg KOH/g, 0.15 mg KOH/g, 0.18 mg KOH/g, 0.2 mg KOH/g, 0.22 mg KOH/g, 0.25 mg KOH/g, 0.28 mg KOH/g, or 0.29 mg KOH/g, as well as specific point values among the above point values. For reasons of limited space and for the sake of brevity, the specific point values included in the range are not exhaustively enumerated in the present invention. Preferably, the water-soluble acid value is 0.1-0.3 mg KOH/g.

Exemplarily, the water-soluble acid value of the polymer additive can be determined via testing by the following method: 1 g of the sample to be tested is uniformly wetted with ethanol (the mass of ethanol is mₑₜₕₐₙₒₗ), then water (the mass of water is m_{water}) is added, and after sealed water boiling at 90°C for 1 h, the mixture is cooled to 25°C and kept at constant temperature for 30 min, and supplemented with water to the total mass before the water boiling; filtration is performed to obtain a clear filtrate with a mass of m₁, and the clear filtrate is subjected to a potentiometric titration test method to determine the test acid value, where the concentration of the potassium hydroxide solution adopted for titration is 0.05 mol/L, and the water-soluble acid value of the polymer additive = test acid value × (m_{water} + mₑₜₕₐₙₒₗ)/m₁.

Preferably, an organic acid value of the polymer additive is ≤ 0.05 mg KOH/g, and for example, may be 0.001 mg KOH/g, 0.01 mg KOH/g, 0.02 mg KOH/g, 0.022 mg KOH/g, 0.025 mg KOH/g, 0.028 mg KOH/g, 0.03 mg KOH/g, 0.032 mg KOH/g, 0.035 mg KOH/g, 0.038 mg KOH/g, 0.04 mg KOH/g, or 0.045 mg KOH/g, as well as specific point values among the above point values. For reasons of limited space and for the sake of brevity, the specific point values included in the range are not exhaustively enumerated in the present invention. Further preferably, the organic acid value is 0.02-0.04 mg KOH/g.

Exemplarily, the organic acid value of the polymer additive may be determined via testing by the following method: 1 g of the sample to be tested is uniformly wetted with dichloromethane (the mass of dichloromethane is m_{dichloromethane}), and then after sealed boiling at 90°C for 1 h, cooled to 25°C and kept at constant temperature for 30 min, and dichloromethane is supplemented to the total mass before the boiling; filtration is performed to obtain a clear filtrate with a mass of m₁, the clear filtrate is subjected to a potentiometric titration test method to determine the test acid value, where the concentration of potassium hydroxide solution adopted for titration is 0.05 mol/L, and the organic acid value of the polymer additive = test acid value × m_{dichloromethane}/m₁.

Preferably, a mass content of a sulfate radical in the polymer additive is 100-700 ppm, and for example, may be 120 ppm, 150 ppm, 200 ppm, 250 ppm, 270 ppm, 300 ppm, 350 ppm, 400 ppm, 420 ppm, 450 ppm, 500 ppm, 550 ppm, 600 ppm, 650 ppm, or 680 ppm, as well as specific point values among the above point values. For reasons of limited space and for the sake of brevity, the specific point values included in the range are not exhaustively enumerated in the present invention. Further preferably, the mass content is 270-420 ppm.

Exemplarily, the mass content of the sulfate radical in the polymer additive is measured by adopting an ion chromatography technique with an external standard method with reference to the method in Standard EN 14582-"Determination of Halogen Content."

Preferably, a D₅₀ particle size of the polymer additive is 1-100 µm, and for example, may be 10 µm, 20 µm, 30 µm, 33 µm, 35 µm, 38 µm, 40 µm, 50 µm, 60 µm, 70 µm, 80 µm, 90 µm, or 95 µm, as well as specific point values among the above point values. For reasons of limited space and for the sake of brevity, the specific point values included in the range are not exhaustively enumerated in the present invention. Further preferably, the particle size is 20-60 µm, and still further preferably 33-38 µm.

The D₅₀ particle size of the polymer additive refers to the particle size corresponding to a volume cumulative distribution percentage of 50%, which may be determined via testing using a laser particle size analyzer with reference to Standard GB/T 19077-2016 Particle size distribution - Laser diffraction methods.

Preferably, a moisture content of the polymer additive is 0.01-1 wt%, and for example, may be 0.02 wt%, 0.05 wt%, 0.08 wt%, 0.1 wt%, 0.15 wt%, 0.2 wt%, 0.25 wt%, 0.3 wt%, 0.4 wt%, 0.5 wt%, 0.6 wt%, 0.7 wt%, 0.8 wt%, or 0.9 wt%, as well as specific point values among the above point values. For reasons of limited space and for the sake of brevity, the specific point values included in the range are not exhaustively enumerated in the present invention. Further preferably, the moisture content is 0.05-0.3 wt%, and still further preferably 0.1-0.25 wt%.

Exemplarily, the moisture content of the polymer additive may be determined via testing by an infrared moisture analyzer. For example, the MA 35 infrared moisture analyzer from Sartorius, Germany is adopted, and the water content is automatically tested after the sample is placed at 120°C for 30 min.

Preferably, a phosphorus content of the polymer additive is 22-25 wt%, and for example, may be 22.2 wt%, 22.5 wt%, 22.8 wt%, 23 wt%, 23.2 wt%, 23.5 wt%, 23.8 wt%, 24 wt%, 24.2 wt%, 24.5 wt%, or 24.8 wt%, as well as specific point values among the above point values. For reasons of limited space and for the sake of brevity, the specific point values included in the range are not exhaustively enumerated in the present invention. Further preferably, the phosphorus content is 23-24 wt%.

Exemplarily, the phosphorus content of the polymer additive may be determined via testing by the following method: the sample to be tested is dissolved in an aqueous sulfuric acid solution (mass concentration 30%), and testing is performed with reference to Standard GB/T 11893-1989 "Water quality - Determination of total phosphorus - Ammonium molybdate spectrophotometric method."

In a third aspect, the present invention provides an application of the polymer additive according to the second aspect in a polymer material.

Preferably, the polymer additive is applied as a flame retardant in the polymer material.

Preferably, the polymer material includes any one or a combination of at least two of a polyamide, a polyester, a polyurethane, a styrenic polymer, a polyolefin, a polyphenylene ether, and a polyacrylate, more preferably a polyamide and/or a polyester.

In a fourth aspect, the present invention provides a polymer composition, including a polymer matrix and the polymer additive according to the second aspect.

Preferably, the polymer composition includes, in parts by mass, the following components:

| | |
|---|---|
| the polymer matrix | 40-99 parts |
| the polymer additive | 5-35 parts. |

Preferably, the polymer matrix, in parts by mass, is 40-99 parts, and for example, may be 45 parts, 50 parts, 55 parts, 60 parts, 65 parts, 70 parts, 75 parts, 80 parts, 85 parts, 90 parts, 95 parts or 98 parts, as well as specific point values among the above point values. For reasons of limited space and for the sake of brevity, the specific point values included in the range are not exhaustively enumerated in the present invention.

Preferably, the polymer additive, in parts by mass, is 5-35 parts, and for example, may be 6 parts, 8 parts, 10 parts, 12 parts, 15 parts, 18 parts, 20 parts, 22 parts, 25 parts, 28 parts, 30 parts, 32 parts or 34 parts, as well as specific point values among the above point values. For reasons of limited space and for the sake of brevity, the specific point values included in the range are not exhaustively enumerated in the present invention.

Preferably, the polymer matrix includes a polyamide and/or a polyester.

Preferably, the polyamide includes any one or a combination of at least two of a polyamide resin and a polyamide elastomer.

The polyamide includes any one or a combination of at least two of a condensation product of a dicarboxylic acid and a diamine, a condensation product of an ω-amino acid, and a ring-opening polymerization product of a cyclic lactam. The dicarboxylic acid exemplarily includes, but is not limited to: any one or a combination of at least two of adipic acid, sebacic acid, dodecanedioic acid, terephthalic acid, and isophthalic acid. The diamine exemplarily includes, but is not limited to: any one or a combination of at least two of pentamethylenediamine, hexamethylenediamine, decamethylenediamine, dodecamethylenediamine, butanediamine, p-phenylenediamine, and m-phenylenediamine. The cyclic lactam exemplarily includes, but is not limited to: any one or a combination of at least two of caprolactam, capryllactam, undecanolactam, and laurolactam. The ω-amino acid exemplarily includes, but is not limited to: any one or a combination of at least two of an ω-amino acid formed by ring-opening of the aforementioned cyclic lactam and aminobenzoic acid.

Preferably, the polyamide includes any one or a combination of at least two of polyamide 6 (polycaprolactam), polyamide 11 (polyundecanolactam), polyamide 12 (polydodecanolactam), polyamide 56 (polypentamethylene adipamide), polyamide 66 (polyhexamethylene adipamide), polyamide 610 (polyhexamethylene sebacamide), polyamide 612 (polyhexamethylene dodecanediamide), polyamide 1010 (polydecamethylene sebacamide), polyamide 1012 (polydecamethylene dodecanediamide), polyamide 1212 (polydodecamethylene dodecanediamide), polyamide 6T (polyhexamethylene terephthalamide), polyamide 10T (polydecamethylene terephthalamide), PPA (poly-p-phenylene terephthalamide).

Preferably, the polyester includes a condensation product of a dicarboxylic acid and/or a derivative thereof with a diol, where the dicarboxylic acid exemplarily includes, but is not limited to: any one or a combination of at least two of terephthalic acid, isophthalic acid, phthalic acid, succinic acid, adipic acid, suberic acid, azelaic acid, sebacic acid, dodecanedioic acid, cyclohexanedicarboxylic acid, hydrogenated isophthalic acid, and hydrogenated phthalic acid, and the derivative includes an acyl halides (an acid chloride), an ester, an acid anhydride, and the like formed from the dicarboxylic acid. The diol exemplarily includes, but is not limited to: any one or a combination of at least two of ethylene glycol, butanediol, and hexanediol.

Exemplarily, the polyester includes polyethylene terephthalate (PET) and/or polybutylene terephthalate (PBT).

It should be noted that the polymer composition of the present invention may further include any other fillers, other auxiliaries, and the like that are motivated to be added in the art.

Preferably, the polymer composition further includes a reinforcing material and/or a filler.

Preferably, the reinforcing material includes a glass fiber and/or a carbon fiber.

Preferably, the reinforcing material in the polymer composition, in parts by mass, is ≤ 45 parts. The reinforcing material, in parts by mass, may be 0 parts, 0.5 parts, 1 part, 2 parts, 5 parts, 8 parts, 10 parts, 15 parts, 20 parts, 25 parts, 30 parts, 35 parts, 40 parts, 42 parts, or 44 parts, as well as specific point values among the above point values. For reasons of limited space and for the sake of brevity, the specific point values included in the range are not exhaustively enumerated in the present invention.

Preferably, the filler includes any one or a combination of at least two of silicon dioxide, talc, titanium dioxide, barium sulfate, kaolin, calcium sulfate, boehmite, mica, magnesium carbonate, and glass microspheres.

Preferably, the filler, in parts by mass, is ≤ 40 parts, and for example, may be 0 parts, 0.5 parts, 1 part, 2 parts, 5 parts, 8 parts, 10 parts, 12 parts, 15 parts, 18 parts, 20 parts, 22 parts, 25 parts, 28 parts, 30 parts, 32 parts, 35 parts, or 38 parts, as well as specific point values among the above point values. For reasons of limited space and for the sake of brevity, the specific point values included in the range are not exhaustively enumerated in the present invention.

Preferably, the other additives, in parts by mass, are 0-15 parts, and for example, may be 0 parts, 0.1 parts, 0.5 parts, 1 part, 2 parts, 3 parts, 4 parts, 5 parts, 6 parts, 7 parts, 8 parts, 9 parts, 10 parts, 12 parts, or 14 parts, as well as specific point values among the above point values. For reasons of limited space and for the sake of brevity, the specific point values included in the range are not exhaustively enumerated in the present invention.

Preferably, the other additives include any one or a combination of at least two of an antioxidant, an ultraviolet absorber, a lubricant, a nucleating agent, a stabilizer, an antistatic agent, and a colorant.

Preferably, the polymer composition further includes any one or a combination of at least two of an antioxidant, an ultraviolet absorber, a lubricant, a nucleating agent, a stabilizer, an antistatic agent, and a colorant.

Preferably, the antioxidant, the ultraviolet absorber, the lubricant, and the nucleating agent, in parts by mass, are each independently 0.01-1.5 parts, and for example, may be 0.05 parts, 0.1 parts, 0.2 parts, 0.3 parts, 0.4 parts, 0.5 parts, 0.6 parts, 0.7 parts, 0.8 parts, 0.9 parts, 1 part, 1.2 parts, or 1.4 parts, as well as specific point values among the above point values. For reasons of limited space and for the sake of brevity, the specific point values included in the range are not exhaustively enumerated in the present invention.

Preferably, the antioxidant in the polymer composition includes any one or a combination of at least two of a hindered amine antioxidant, a hindered phenol antioxidant, a phosphite antioxidant, and a thioester antioxidant.

Exemplarily, the antioxidant in the polymer composition includes any one or a combination of at least two of pentaerythritol tetrakis(β-(3,5-di-tert-butyl-4-hydroxyphenyl)propionate) (antioxidant 1010), n-octadecyl β-(3,5-di-tert-butyl-4-hydroxyphenyl)propionate (antioxidant 1076), N,N'-bis-(3-(3,5-di-tert-butyl-4-hydroxyphenyl)propionyl)hexanediamine (antioxidant 1098), tris(2,4-di-tert-butylphenyl) phosphite (antioxidant 168), bis(2,4-dicumylphenyl)pentaerythritol diphosphite (antioxidant 608), 2,6-di-tert-butyl-p-cresol (antioxidant BHT), distearyl β,β-thiodipropionate (antioxidant DSTP), antioxidant 215, and antioxidant 225.

Preferably, the lubricant includes any one or a combination of at least two of an ester lubricant, an alcohol lubricant, a hydrocarbon lubricant, a fatty acid lubricant, a fatty acid amide lubricant, and a metallic soap lubricant.

Preferably, the polymer composition further includes, in parts by mass, 0-15 parts of a synergistic flame retardant. The synergistic flame retardant, in parts by mass, may be 0 parts, 0.1 parts, 0.5 parts, 1 part, 2 parts, 3 parts, 4 parts, 5 parts, 6 parts, 7 parts, 8 parts, 9 parts, 10 parts, 12 parts, or 14 parts, as well as specific point values among the above point values. For reasons of limited space and for the sake of brevity, the specific point values included in the range are not exhaustively enumerated in the present invention.

Preferably, the synergistic flame retardant includes any one or a combination of at least two of melamine polyphosphate, a melamine polyphosphate salt, zinc borate, zinc stannate, zinc sulfide, and boehmite.

In a preferred technical solution, the polymer composition includes, in parts by mass, the following components:

| | |
|---|---|
| the polymer matrix | 40-99 parts |
| the polymer additive | 5-35 parts |
| the reinforcing material | 0-45 parts |
| the synergistic flame retardant | 0-15 parts |
| the lubricant | 0-1.5 parts |
| the antioxidant | 0-1.5 parts. |

Preferably, a mass percentage content of the polymer matrix in the polymer composition is 40%-99%, for example, 45%, 50%, 55%, 60%, 65%, 70%, 75%, 80%, 85%, 90%, 95%, or 98%, as well as specific point values among the above point values. For reasons of limited space and for the sake of brevity, the specific point values included in the range are not exhaustively enumerated in the present invention.

Preferably, a mass percentage content of the polymer additive in the polymer composition is 5%-35%, for example, 6%, 8%, 10%, 12%, 15%, 18%, 20%, 22%, 25%, 28%, 30%, 32%, or 34%, as well as specific point values among the above point values. For reasons of limited space and for the sake of brevity, the specific point values included in the range are not exhaustively enumerated in the present invention. Further preferably, the mass percentage is 6%-20%.

Exemplarily, the method for preparing the polymer composition includes: melt-blending and extruding the components of the polymer composition to obtain the polymer composition.

Preferably, the polymer matrix, optionally the filler, and optionally other auxiliaries are first premixed to obtain a premix; and then the premix, the polymer additive, and optionally the reinforcing material are melt-blended and extruded to obtain the polymer composition.

Preferably, the melt-blending is performed in a screw extruder.

Preferably, the screw extruder is a twin-screw extruder.

Preferably, a temperature of the screw extruder is 180-330°C, and for example, may be 190°C, 200°C, 210°C, 220°C, 230°C, 240°C, 250°C, 260°C, 270°C, 280°C, 290°C, 300°C, 310°C, or 320°C, as well as specific point values among the above point values. For reasons of limited space and for the sake of brevity, the specific point values included in the range are not exhaustively enumerated in the present invention.

Preferably, the extrusion is further followed by steps of pelletizing and drying.

Compared with the prior art, the present invention has the following beneficial effects:
In the method for preparing the polymer additive provided by the present invention, through the design of materials such as the antioxidant and the flocculant, as well as the design and synergistic effect of the process and parameters thereof, a polymer additive with a low acid value is obtained. When the polymer additive is used as a flame retardant to prepare a polymer composition, it can inhibit or avoid auxiliary precipitation during high-temperature processing, prevent precipitates from blocking device pipelines, significantly reduce mold deposits generated during injection molding at the same time, and enable the polymer composition to have a low content of water-boiling precipitates, thereby greatly improving the stability and service life of the polymer composition under hot and humid conditions.

### DETAILED DESCRIPTION OF EMBODIMENTS

The technical solutions of the present invention are further described below through specific embodiments. Those skilled in the art should understand that examples described are merely to facilitate an understanding of the present invention and should not be regarded as specific limitations to the present invention.

The terms "comprise," "include," "have," "contain," or any other variations thereof as used herein are intended to cover non-exclusive inclusion. For example, a composition, step, method, article, or device including the listed elements is not necessarily limited to only those elements, but may also include other elements not expressly listed or elements inherent to such a composition, step, method, article, or device.

In the following detailed description, test methods for parameters of the polymer additive are as follows:

### (1) Test for contents of a diethylphosphinate, an ethylbutylphosphinate, an ethylphosphonate, and a monoethylphosphinate

The contents are analyzed and determined via testing by adopting a liquid chromatograph (LC20A, Shimadzu, Japan). A commercially available standard sample is adopted for the diethylphosphinate. The pure product of the ethylbutylphosphinate (prepared with reference to Example 4 of CN103172668A) is adopted as the standard sample. The pure product of the ethylphosphonate (prepared with reference to Example 2 of CN104371142A) is adopted as the standard sample. The pure product of the monoethylphosphinate (prepared with reference to Example 1 of CN103172668A) is adopted as the standard sample. The sample to be tested is dissolved in an aqueous sulfuric acid solution (mass concentration 30%) with 5 times the mass of the sample, and then diluted 20 times with the mobile phase for analysis and testing. The mobile phase is a mixture of water and methanol at a mass ratio of 9:1, added with trifluoroacetic acid at a volume content of 0.5%. A ShimNex CS C18 column (5 µm, 4.6×250 mm) is adopted, with a flow rate of 0.6 mL/min. The mass content of each component is calculated by the area normalization method.

### (2) Content of an alkali-insoluble substance

5 g of the sample to be tested is taken and stirred with 500 g of an aqueous sodium hydroxide solution (mass concentration 3%) at 35°C for 30 min, filtered with filter paper having a precision of ≤ 2 µm, and rinsed with 100 g of water 3 times. The filter paper is dried and then weighed, and the mass increase value relative to the filter paper before filtration (dry filter paper) is the mass of the insoluble substance. The ratio of the mass of the insoluble substance to the mass of the sample to be tested (5 g) is the mass content of the alkali-insoluble substance.

### (3) Water-soluble acid value

1 g of the sample to be tested is taken, added with 5.00±0.01 g (mₑₜₕₐₙₒₗ) of ethanol for uniform wetting, and added with 50±0.01 g (m_{water}) of normal-temperature water. The total weight m₀ is weighed together with the bottle and the stirrer. After sealed water boiling at 90°C for 1 h, the mixture is cooled to 25°C and kept at a constant temperature for 30 min, and then supplemented with water to the total weight m₀. Filtration is performed to obtain a clear filtrate with a mass of m₁, and the clear filtrate is subjected to a potentiometric titration test method to determine the test acid value, where the concentration of the potassium hydroxide solution adopted for titration is 0.05 mol/L, and the water-soluble acid value of the polymer additive = test acid value × (m_{water} + mₑₜₕₐₙₒₗ)/m₁.

### (4) Organic acid value

1 g of the sample to be tested is taken, and added with 50.0±0.01 g (m_{dichloromethane}) of dichloromethane for uniform wetting. The total weight m₀ is weighed together with the bottle and the stirrer. After sealed boiling at 90°C for 1 h, the mixture is cooled to 25°C and kept at a constant temperature for 30 min, and then supplemented with dichloromethane to the total weight m₀. Filtration is performed to obtain a clear filtrate with a mass of m₁, and the clear filtrate is subjected to a potentiometric titration test method to determine the test acid value, where the concentration of the potassium hydroxide solution adopted for titration is 0.05 mol/L, and the organic acid value of the polymer additive = test acid value × m_{dichloromethane}/m₁.

### (5) Mass content of a sulfate radical

The measurement is performed by an ion chromatography technique with an external standard method with reference to the method in Standard EN 14582:2007-"Determination of Halogen Content."

### (6) D₅₀ particle size

0.1 g of the sample to be tested is taken, wetted with 5 g of ethanol, and further diluted by adding 50 mL of water. Testing is performed by adopting a Mastersizer 3000 laser particle size analyzer.

### (7) Moisture content

The sample to be tested is placed in an infrared moisture analyzer (Model MA 35, Sartorius, Germany). The moisture content is automatically tested after the sample is placed at 105°C for 30 min.

### (8) Phosphorus content

0.1 g of the sample to be tested is taken and dissolved by adding 2 g of an aqueous sulfuric acid solution with a mass concentration of 30%. Testing is performed with reference to Standard GB/T 11893-1989 "Water quality - Determination of total phosphorus - Ammonium molybdate spectrophotometric method."

In the following specific embodiments of the present invention, all materials for which no preparation method is provided are commercially available chemicals, and the specific information of some materials is as follows:

| | Grade, manufacturer |
|---|---|
| Antioxidant 1076 | RIANOX 1076, commercially available |
| Antioxidant 1010 | RIANOX 1010, commercially available |
| Antioxidant 608 | Revonox 608, commercially available |
| Flocculant: anionic polyacrylamide | Gongyi Xinqi Polymer Co., Ltd. |
| Polyamide 66 (PA66) | PA66 M2000, Guangdong Xinhui Meida Nylon Co., Ltd. |
| Polyamide 6 (PA6) | PA6 EPR24, Shenma Industrial Co., Ltd. |
| Melamine polyphosphate (MPP) | BUDIT 3141, Budenheim GmbH, Germany |
| Glass fiber | ECS10-03-568H, China Jushi Co., Ltd. |
| Lubricant | TR044W, Struktol GmbH, Germany |
| Antioxidant 1098 | RIANOX 1098, commercially available |
| Antioxidant 168 | RIANOX 168, commercially available |

The polymer additive and the preparation method thereof according to the present invention will be described in detail below by way of multiple examples, but the polymer additive and the preparation method thereof are not limited to these examples.

### Examples 1-9, Comparative Examples 1-5

A polymer additive and a preparation method thereof, where the preparation method was as follows:
(1) 39.6 kg of an aqueous hypophosphorous acid solution with a mass percentage content of 50%, 500 g of sodium persulfate, and an antioxidant with a mass of m₁ were placed into an autoclave. The autoclave was purged with nitrogen 3 times. Ethylene was pressurized to a constant pressure of 1.5 MPa via a pressure reducer, and the system was heated to a temperature of T₁ and held at this temperature for 5.5 h. During the temperature holding, 3500 g of an aqueous sodium persulfate solution with a mass percentage content of 10% was continuously supplemented. Then the system was held at the temperature of T₁ for 1.5 h, cooled, and vented to obtain an aqueous diethylphosphinic acid solution.
(2) The aqueous diethylphosphinic acid solution obtained in step (1) (diethylphosphinic acid: 6 mol), an aqueous sulfuric acid solution (mass percentage content of sulfuric acid: 30%, molar amount: n₁), and 2 mol of aluminum hydroxide were mixed. The mixture was heated to a temperature of T₂ and stirred for reaction for 8 h, and the pH value was adjusted using a sodium hydroxide solution (mass percentage content: 10%) to obtain a diethylphosphinate slurry.
(3) At 50°C, an aqueous flocculant solution prepared from anionic polyacrylamide with a mass of m₂ and 50 g of water was added to the diethylphosphinate slurry obtained in step (2). The mixture was stirred until a flocculated state was reached, followed by filtration. The filter cake was washed 5 times with water of 3 times its mass, and was dried at 110°C to constant weight to obtain the polymer additive.

Specific process parameters of the preparation method and relevant data of the prepared polymer additive are as shown in Table 1 and Table 2; "--" indicates that the material is not added.

**Table 1**

| | | Exam ple 1 | Exam ple 2 | Exam ple 3 | Exam ple 4 | Exam ple 5 | Exam ple 6 | Exam ple 7 | Exam ple 8 | Exam ple 9 |
|---|---|---|---|---|---|---|---|---|---|---|
| Step (1) | Type of antioxidant | 1076 | 1076 | 1076 | 1076 | 1076 | 1076 | 1076 | 1010 | 608 |
| | m₁ (g) | 25 | 25 | 25 | 25 | 25 | 12 | 180 | 9 | 220 |
| | T₁ (°C) | 85 | 85 | 85 | 85 | 75 | 95 | 85 | 85 | 85 |
| Step (2) | n₁ (mol) | 0.6 | 0.6 | 0.6 | 1.0 | 1.2 | 0.6 | 0.6 | 0.6 | 0.6 |
| | T₂ (°C) | 90 | 90 | 90 | 90 | 90 | 90 | 90 | 90 | 90 |
| | pH value | 3.8 | 4.0 | 4.2 | 4.0 | 4.0 | 4.0 | 3.8 | 3.8 | 3.8 |
| Step (3) | m₂ (g) | 0.5 | 0.5 | 0.2 | 2 | 1 | 0.5 | 0.5 | 0.5 | 0.5 |
| Polymer additive No. | | A1 | A2 | A3 | A4 | A5 | A6 | A7 | A8 | A9 |
| Aluminum diethylphosphinate (parts) | | 96.91 | 97.15 | 98.21 | 97.48 | 97.42 | 96.52 | 97.9 | 96.83 | 98.19 |
| Aluminum ethylbutylphosphinate (parts) | | 2.5 | 2.2 | 1.3 | 2.1 | 2.2 | 2.7 | 1.5 | 2.4 | 1.1 |
| Aluminum ethylphosphonate (parts) | | 0.32 | 0.30 | 0.32 | 0.25 | 0.29 | 0.56 | 0.17 | 0.61 | 0.12 |
| Aluminum monoethylphosphinate (parts) | | 0.06 | 0.05 | 0.02 | 0.08 | 0.09 | 0.02 | 0.16 | 0.02 | 0.20 |
| Alkali-insoluble substance (parts) | | 0.21 | 0.30 | 0.15 | 0.09 | 0 | 0.20 | 0.27 | 0.14 | 0.39 |
| Sulfate radical (ppm) | | 316 | 392 | 410 | 291 | 322 | 283 | 369 | 314 | 382 |
| Water-soluble acid value (mg KOH/g) | | 0.102 | 0.146 | 0.157 | 0.157 | 0.280 | 0.258 | 0.177 | 0.297 | 0.192 |
| Organic acid value (mg KOH/g) | | 0.025 | 0.039 | 0.036 | 0.036 | 0.040 | 0.021 | 0.038 | 0.032 | 0.040 |
| D₅₀ particle size (µm) | | 34.2 | 36.5 | 33.1 | 37.6 | 35.5 | 34.8 | 35.6 | 33.6 | 33.1 |
| Moisture content (wt%) | | 0.11 | 0.13 | 0.20 | 0.16 | 0.13 | 0.11 | 0.21 | 0.18 | 0.16 |
| Phosphorus content (wt%) | | 23.7 | 24.0 | 23.9 | 23.2 | 23.4 | 23.1 | 23.6 | 23.8 | 23.6 |

**Table 2**

| | | Comparati ve Example 1 | Comparati ve Example 2 | Comparati ve Example 3 | Comparati ve Example 4 | Comparati ve Example 5 |
|---|---|---|---|---|---|---|
| Step (1) | Type of antioxidant | 1076 | 1076 | -- | -- | 1076 |
| | m₁ (g) | 25 | 25 | -- | -- | 25 |
| | T₁ (°C) | 85 | 85 | 85 | 85 | 85 |
| Step (2) | n₁ (mol) | 0.6 | 0.6 | 0.6 | 0.6 | 0.6 |
| | T₂ (°C) | 90 | 90 | 90 | 90 | 90 |
| | pH value | 3.6 | 4.3 | 4.0 | 4.2 | 4.0 |
| Step (3) | m₂ (g) | 0.5 | 0.5 | 0.5 | 0.5 | -- |
| Polymer additive No. | | D1 | D2 | D3 | D4 | D5 |
| Aluminum diethylphosphinate (parts) | | 96.87 | 96.81 | 97.31 | 97.12 | 97.29 |
| Aluminum ethylbutylphosphinate (parts) | | 2.6 | 2.6 | 2.1 | 2.3 | 2.2 |
| Aluminum ethylphosphonate (parts) | | 0.29 | 0.29 | 0.52 | 0.50 | 0.30 |
| Aluminum monoethylphosphinate (parts) | | 0.03 | 0.04 | 0.02 | 0.02 | 0.04 |
| Alkali-insoluble substance (parts) | | 0.21 | 0.26 | 0.05 | 0.06 | 0.17 |
| Sulfate radical (ppm) | | 436 | 386 | 472 | 417 | 480 |
| Water-soluble acid value (mg KOH/g) | | 0.310 | 0.391 | 0.422 | 0.359 | 0.322 |
| Organic acid value (mg KOH/g) | | 0.064 | 0.059 | 0.068 | 0.064 | 0.063 |
| D₅₀ particle size (µm) | | 35.2 | 36.8 | 32.7 | 35.1 | 34.5 |
| Moisture content (wt%) | | 0.15 | 0.16 | 0.14 | 0.17 | 0.18 |
| Phosphorus content (wt%) | | 24.1 | 23.6 | 23.2 | 23.9 | 23.6 |

It can be seen from Table 1 that in the present invention, the method for preparing the polymer additive is designed. In particular, through the use of the antioxidant and the flocculant, as well as the control of the pH value of the slurry, a polymer additive with a low acid value is prepared, whose water-soluble acid value is ≤ 0.3 mg KOH/g. The polymer additive includes, in parts by mass, the following components: 95-98.98 parts of the diethylphosphinate, 1-3 parts of the ethyl butylphosphinate, 0.01-0.7 parts of the ethylphosphonate, 0.01-0.3 parts of the monoethylphosphinate, and 0-3 parts of the alkali-insoluble substance.

In Table 2, the pH values of the slurries in Comparative Examples 1-2 are beyond the limited range of the present invention, no antioxidant is used in Comparative Examples 3-4, and no flocculant is added in Comparative Example 5, resulting in significant increases in both the water-soluble acid value and the organic acid value of the polymer additive.

The application of the polymer additive according to the present invention will be described in detail below by way of application examples, but the application of the polymer additive is not limited to these application examples.

### Application Examples 1-9, Comparative Application Examples 1-5

A polymer composition, specifically a polyamide composition, where types and use amounts of each component are as shown in Table 3 and Table 4, and the use amount unit of each component is "parts by mass."

A method for preparing the polyamide composition included: polyamide 66, polyamide 6, a glass fiber, an polymer additive, MPP, an antioxidant, and a lubricant were mixed according to the formulation amounts to obtain a premix; and the premix was added into a twin-screw extruder at a screw speed of 400 rpm, and with temperatures of zones 1-12 at 90°C, 180°C, 260°C, 250°C, 230°C, 230°C, 220°C, 220°C, 220°C, 220°C, 260°C, and 260°C, respectively. After melt mixing and extrusion pelletizing, polyamide composition pellets are obtained.

The polyamide composition was subjected to the following performance tests:
(1) Water-boiling phosphorus content test: 50 g of polyamide composition pellets were taken and added to 500 mL of hot water at 90°C, followed by water-boiling for 1 h. The mixture was cooled to room temperature and filtered. The phosphorus content of the filtrate was determined by the ammonium molybdate spectrophotometric method specified in GB/T 11893-1989.
(2) Injection molding mold deposit test method: using an injection molding machine, the polyamide composition pellets were continuously injected for 150 cycles at injection temperatures of 290°C, 285°C, 280°C, and 260°C. The mold deposit sample finally collected from the mold was removed and weighed by adopting an analytical balance.
(3) Precipitation amount during extrusion: a cyclone separator with jacket cooling is installed on the vacuum line of a twin-screw extruder with a diameter of 75 mm and a length-to-diameter ratio of 48:1 to separate precipitated substances drawn out by vacuum during extrusion. After continuous production of 2000 kg of the product, the precipitated substances in the cyclone separator are weighed as the precipitation amount during extrusion. "Blockage" indicates that the precipitation amount is excessively large, resulting in vacuum system blockage before 8 h of production is completed.

The test data are as shown in Table 3 and Table 4.

**Table 3**

| | | Appli cation Exam ple 1 | Appli cation Exam ple 2 | Appli cation Exam ple 3 | Appli cation Exam ple 4 | Appli cation Exam ple 5 | Appli cation Exam ple 6 | Appli cation Exam ple 7 | Applic ation Examp le 8 | Appli cation Exam ple 9 |
|---|---|---|---|---|---|---|---|---|---|---|
| Polyamid e | PA66 | 50 | 50 | 50 | 45 | 50 | 50 | 50 | 50 | 56 |
| | PA6 | 6 | 6 | 6 | 5 | 6 | 6 | 6 | 6 | -- |
| Polymer additive | Type | A1 | A2 | A3 | A4 | A5 | A6 | A7 | A8 | A9 |
| | Use amount | 14 | 14 | 14 | 14 | 12 | 14 | 14 | 14 | 14 |
| Glass fiber | | 25 | 25 | 25 | 25 | 25 | 30 | 25 | 25 | 25 |
| MPP | | 4 | 4 | 4 | 4 | 6 | 4 | 4 | 4 | 4 |
| Lubricant | | 0.5 | 0.5 | 0.5 | 0.5 | 0.5 | -- | 0.5 | 0.5 | 0.5 |
| Antioxida | 1098 | 0.25 | 0.25 | 0.25 | 0.25 | 0.25 | 0.25 | -- | 0.25 | 0.25 |
| nt | 168 | 0.25 | 0.25 | 0.25 | 0.25 | 0.25 | 0.25 | -- | 0.25 | 0.25 |

| Performance test | | | | | | | | | | |
|---|---|---|---|---|---|---|---|---|---|---|
| Mold deposits (mg) | | 6.2 | 6 | 6.6 | 5.8 | 5.9 | 6.8 | 6.7 | 7 | 7.2 |
| Water-boiling phosphorus content (ppm) | | 478 | 460 | 453 | 398 | 410 | 430 | 478 | 462 | 490 |
| Precipitation amount during extrusion (g) | | 309 | 343 | 487 | 441 | 690 | 665 | 417 | 743 | 507 |

**Table 4**

| | | Comparativ e Application Example 1 | Comparativ e Application Example 2 | Comparativ e Application Example 3 | Comparativ e Application Example 4 | Comparativ e Application Example 5 |
|---|---|---|---|---|---|---|
| Polyamide | PA66 | 50 | 50 | 50 | 50 | 50 |
| | PA6 | 6 | 6 | 6 | 6 | 6 |
| Polymer additive | Type | D1 | D2 | D3 | D4 | D5 |
| | Use amount | 14 | 14 | 14 | 14 | 14 |
| Glass fiber | | 25 | 25 | 25 | 25 | 25 |
| MPP | | 4 | 4 | 4 | 4 | 4 |
| Lubricant | | 0.5 | 0.5 | 0.5 | 0.5 | 0.5 |
| Antioxidant | 1098 | 0.25 | 0.25 | 0.25 | 0.25 | 0.25 |
| | 168 | 0.25 | 0.25 | 0.25 | 0.25 | 0.25 |

| Performance test | | | | | | |
|---|---|---|---|---|---|---|
| Mold deposits (mg) | | 9.3 | 9.7 | 12.7 | 11.2 | 10.6 |
| Water-boiling phosphorus content (ppm) | | 560 | 523 | 584 | 537 | 519 |
| Precipitation amount during extrusion (g) | | 930 | 1920 | >2000 Blockage | 1477 | 1011 |

As can be seen from the data in Table 3, when the polymer additive provided by the present invention is used as a flame retardant in a polyamide composition, it can effectively inhibit auxiliary precipitation during extrusion processing, reduce the risk of blockage, and significantly reduce mold deposits produced by injection molding at the same time, such that the mold deposit is ≤ 7.2 mg. Furthermore, the water-boiling phosphorus content of the polyamide composition is ≤ 490 ppm, which reduces the content of water-boiling precipitates and improves the stability and service life of the polyamide composition under hot and humid conditions.

As can be seen from the test data in Table 4, since the polymer additives of Comparative Examples 1-5 have a high acid value, when used as flame retardants in polyamide compositions, they lead to a significant problem of auxiliary precipitation during extrusion processing and easily cause pipeline blockage. Furthermore, injection molding produces more mold deposits, and the water-boiling phosphorus content is increased, indicating that their stability under hot and humid conditions is significantly insufficient.

The applicant declares that the polymer additive, and the preparation method and the application thereof of the present invention are illustrated by the above examples, but the present invention is not limited to the above examples, that is, it does not mean that the present invention needs to rely on the above examples to be implemented. Those skilled in the art should understand that any improvements to the present invention, equivalent substitutions of various raw materials in products of the present invention, addition of auxiliary ingredients, and selections of specific methods all fall within the scope of protection and the scope of disclosure of the present invention.

## Claims

1. A method for preparing a polymer additive, comprising the following steps:
(1) subjecting an aqueous hypophosphorous acid solution and an antioxidant to a free radical reaction with ethylene under the action of an initiator to obtain an aqueous diethylphosphinic acid solution;
(2) subjecting the aqueous diethylphosphinic acid solution, sulfuric acid, and a metal hydroxide to a reaction, followed by adding an alkaline solution to obtain a diethylphosphinate slurry with a pH value of 3.8-4.2; and
(3) mixing and stirring the diethylphosphinate slurry with a flocculant to obtain a diethylphosphinate flocculate; and filtering, washing, and drying the diethylphosphinate flocculate to obtain the polymer additive.

2. The preparation method according to claim 1, wherein the antioxidant comprises any one or a combination of at least two of a hindered amine antioxidant, a hindered phenol antioxidant, a phosphite antioxidant, and a thioester antioxidant, preferably any one or a combination of at least two of a hindered phenol antioxidant, a phosphite antioxidant, and a thioester antioxidant;
preferably, the antioxidant comprises any one or a combination of at least two of pentaerythritol tetrakis(β-(3,5-di-tert-butyl-4-hydroxyphenyl)propionate), n-octadecyl β-(3,5-di-tert-butyl-4-hydroxyphenyl)propionate, N,N'-bis-(3-(3,5-di-tert-butyl-4-hydroxyphenyl)propionyl)hexamethylenediamine, tris(2,4-di-tert-butylphenyl) phosphite, bis(2,4-dicumylphenyl) pentaerythritol diphosphite, 2,6-di-tert-butyl-p-cresol, and distearyl β,β-thiodipropionate; and
preferably, the initiator comprises any one or a combination of at least two of an organic peroxide, a persulfate, an azo initiator, and a photoinitiator.

3. The preparation method according to claim 1, wherein a mass percentage content of hypophosphorous acid in the aqueous hypophosphorous acid solution is 20-70%, preferably 45-55%;
preferably, a mass ratio of the hypophosphorous acid to the antioxidant is 100:(0.02-1.2), further preferably 100:(0.05-1); and
preferably, a mass ratio of the hypophosphorous acid to the initiator is 100:(0.1-5).

4. The preparation method according to claim 1, wherein a temperature of the free radical reaction is 60-105°C, preferably 70-100°C, and further preferably 75-95°C;
preferably, the free radical reaction is carried out in a protective atmosphere; and
preferably, the protective atmosphere comprises a nitrogen atmosphere and/or an argon atmosphere.

5. The preparation method according to claim 1, wherein the metal hydroxide comprises any one or a combination of at least two of aluminum hydroxide, calcium hydroxide, copper hydroxide, zinc hydroxide, iron hydroxide, and titanium hydroxide, preferably aluminum hydroxide;
preferably, based on a molar amount of the diethylphosphinic acid as 100%, a molar amount of the metal hydroxide is 30-50 mol%;
preferably, based on the molar amount of the diethylphosphinic acid as 100%, a molar amount of the sulfuric acid is 5-50 mol%, further preferably 8-30 mol%, and more preferably 10-15 mol%;
preferably, a temperature of the reaction in step (2) is 70-150°C, further preferably 80-120°C, and more preferably 90-100°C; and
preferably, a time of the reaction in step (2) is 2-12 h.

6. The preparation method according to claim 1, wherein the flocculant comprises a polyacrylamide flocculant, preferably anionic polyacrylamide and/or nonionic polyacrylamide, and more preferably anionic polyacrylamide;
preferably, based on a theoretical mass obtained of the diethylphosphinate as 100%, a mass of the flocculant is 0.01-0.5%;
preferably, a temperature of the mixing in step (3) is 40-60°C; and
preferably, the number of washings in step (3) is ≥ 4.

7. A polymer additive, prepared by the preparation method according to any one of claims 1-6, wherein a water-soluble acid value of the polymer additive is ≤ 0.3 mg KOH/g; and
the polymer additive comprises, in parts by mass, the following components:
a diethylphosphinate 95-98.98 parts
an ethylbutylphosphinate 1-3 parts
an ethylphosphonate 0.01-0.7 part
a monoethylphosphinate 0.01-0.3 part
an alkali-insoluble substance 0-3 parts,
wherein the alkali-insoluble substance is selected from any one or a combination of at least two of a hydroxide, an oxide, a phosphate, a phosphite, and other alkylphosphonates.

8. The polymer additive according to claim 7, wherein the water-soluble acid value of the polymer additive is 0.1-0.3 mg KOH/g;
preferably, an organic acid value of the polymer additive is ≤ 0.05 mg KOH/g, further preferably 0.02-0.04 mg KOH/g;
preferably, a mass content of a sulfate radical in the polymer additive is 100-700 ppm, further preferably 270-420 ppm;
preferably, a D₅₀ particle size of the polymer additive is 1-100 µm, further preferably 20-60 µm, and still further preferably 33-38 µm;
preferably, a moisture content of the polymer additive is 0.01-1 wt%, further preferably 0.05-0.3 wt%, and still further preferably 0.1-0.25 wt%; and
preferably, a phosphorus content of the polymer additive is 22-25 wt%, and further preferably 23-24 wt%.

9. An application of the polymer additive according to claim 7 or 8 in a polymer material,
wherein preferably, the polymer additive is applied as a flame retardant in the polymer material.

10. A polymer composition, comprising a polymer matrix and the polymer additive according to claim 7 or 8,
wherein preferably, the polymer composition comprises, in parts by mass, the following components:
the polymer matrix 40-99 parts
the polymer additive 5-35 parts,
wherein preferably, the polymer matrix comprises a polyamide and/or a polyester.
